# EUROPÄISCHE PATENTANMELDUNG

(11) **EP 1 223 032 A2**
(43) Veröffentlichungstag der Anmeldung: **17.07.2002**
(21) Anmeldenummer: 01131041.4
(22) Anmeldetag: 28.12.2001
(51) Int. Cl.: B32B 15/08, B32B 3/12

(54) **Plattenförmiges Leichtbauteil**

(30) Priorität: 11.01.2001 DE 10100914
(71) Anmelder: Bayer Aktiengesellschaft, 51368 Leverkusen (DE)
(72) Erfinder: Wagenblast, Joachim, Dr., 134-136 Hong Kong (CN)

(57) **Zusammenfassung**

Es wird ein plattenförmiges Leichtbauteil auf Basis eines Kunststoff-Metall-Verbundes beschrieben. Das Leichtbauteil besteht wenigstens aus zwei gegenüberliegend angeordneten Platten (2), (4) und einer zwischenliegenden Hohlräume bildenden Stützstruktur (3) aus thermoplastischem Kunststoff, wobei die Metallplatten (2; 4) mit der Stützstruktur an mehreren diskreten Verankerungspunkten (21, 41) fest verbunden sind, dadurch gekennzeichnet, dass die Verankerungspunkte (21, 41) auf der Fläche der Metallplatten (2; 4) gleichmäßig verteilt sind.

## Beschreibung

Dreidimensional gewölbtes oder ebenes plattenförmiges Leichtbauteil in Verbundbauweise bestehend aus einer "Eierkarton-Struktur" aus umgeformtem thermoplastischem Halbzeug oder einer anderen thermoplastischen Rippenstruktur und einer hoch festen Komponente.

Die Erfindung betrifft biege- und verwindungssteife plattenförmige Leichtbauteile in Hybridbauweise.

Das plattenförmige Leichtbauteil besteht aus einer hoch festen und hoch steifen Komponente wie z.B. Stahl oder Composites, die mit Hilfe einer thermoplastischen Eierkarton-Struktur oder eines thermoplastischen Extrusionsprofils gestützt wird.

Hoch belastbare Profile und Platten mit geringem Gewicht werden häufig als Sandwich ausgeführt indem zwischen zwei Metall- oder Composite-Platten ein Schaumstoff oder eine Wabenstruktur stoffschlüssig angebracht wird (Pippert, Karosserietechnik, 2. Auflage, Vogel Buchverlag, Würzburg, 1992). Weiterhin gibt es Verfahren zur Herstellung von Verbundplatten mit außenliegenden Blechen und innenliegender Rippenstruktur (EP 0775573 A2). Außerdem werden in der Offenlegungsschrift EP 370342 A2 Kunststoff/Metall-Verbundbauteile beschrieben, die aus durch Kunststoff-Rippen abgestützte Blechstrukturen bestehen.

Diese in der Praxis vorherrschenden plattenförmigen Leichtbauteile haben entweder den Nachteil, wie im Falle der Sandwichplatten, dass der Verbund zwischen Außenhaut und Kern nicht formschlüssig ausgeführt ist, oder wie im Falle der verrippten Leichtbauteile, dass diese, sofern sie diskontinuierlich hergestellt werden, mit einer aufwendigen Technologie gefertigt sind.

Übliche Sandwichkonstruktionen weisen eine stoff- und/oder kraftschlüssige Fügung zwischen Außenhaut und Kern bzw. zwischen der hochfestem Komponente und der leichten Struktur (Schaumstoff, Rippen- oder Wabenstruktur) auf. Dadurch ist die Schubsteifigkeit des Verbundes abhängig von der Qualität der Fügung. Hierbei sind folgende Einflussfaktoren von Bedeutung: Werkstoffpaarung, Oberflächenbeschaffenheit (Reinheit, Rauhigkeit) und bei geklebten Verbindungen die Werkstoffeigenschaften des Klebstoffes. Weiterhin kann die Qualität des Verbundes in einem hohen Maß durch die vorherrschende Umgebung beeinflusst werden.

Leichtbauteilen aus hochfesten Komponenten wie Bleche und einer diese stützenden Rippenstruktur aus Thermoplast werden bei diskontinuierlicher Fertigungsweise durch Blechumformung mit nachgeschaltetem Spritzgießprozess hergestellt (EP 370 342 A2). Diese Fertigungsmethode erfordert hohe Werkzeug- und Maschinenkosten, so dass sie sich meist nur für den Einsatz von Großserien, wie sie z.B. in der Automobilindustrie vorzutreffen sind, lohnt. Bei kontinuierlicher Fertigungsweise mittels Extrudieren (EP 0 775 573 A2) können zwar die Herstellkosten auch bei kleineren Stückzahlen niedrig gehalten werden, diesen Vorteil erkauft man sich jedoch mit dem Nachteil, dass dann die Funktionalität der Leichtbauteile eingeschränkt oder der Nachbearbeitungsaufwand hoch ist.

Der Erfindung liegt daher die Aufgabe zugrunde, plattenförmige Leichtbauteile der eingangs erwähnten Art zu schaffen, die sowohl hoch fest und hoch steif sind als auch durch ein wirtschaftliches Herstellungsverfahren gefertigt werden können.

Diese Aufgabe wird erfindungsgemäß dadurch gelöst, dass durch das Umformen einer thermoplastischen Komponente, wenigstens zwei flächige Strukturen, bestehend aus einer hoch festen Komponente und einer thermoplastischen Rippenstruktur, miteinander zu einem Leichtbauteil verbunden werden.

Gegenstand der Erfindung ist ein plattenförmiges Leichtbauteil auf Basis eines Kunststoff-Metall-Verbundes bestehend wenigstens aus zwei gegenüberliegend angeordneten Platten, wovon wenigstens eine Platte eine Metallplatte ist, und einer zwischenliegenden Hohlräume bildenden Stützstruktur aus thermoplastischem Kunststoff, wobei die Platten mit der Stützstruktur an mehreren diskreten Verankerungspunkten festverbunden sind, dadurch gekennzeichnet, dass die Verankerungspunkte auf der Fläche der Platten gleichmäßig verteilt sind.

Bevorzugt ist die Stützstruktur mindestens in zwei Richtungen der Ebene der (Metall)-Platten gesehen spiegelsymmetrisch ausgebildet. Hierdurch wird z.B. eine hohe Biegesteifigkeit sowohl in Quer- als auch in Längsrichtung gewährleistet.

Besonders bevorzugt ist ein Leichtbauteil, das dadurch gekennzeichnet ist, dass mindestens eine Seite eines Hohlraumes, der durch die Stützstruktur und eine den (Metall)-Platten gebildet wird, mit einem Schaumstoff ausgefüllt ist.

In einer besonders bevorzugten Ausbildung der Erfindung sind die Verankerungspunkte in Form von Durchbrüchen, Ausnehmungen, Noppen ausgebildet.

Die Thermoplastkomponente kann sowohl aus einem unverstärkten oder verstärkten als auch aus einem ungefüllten oder gefüllten Kunststoff bestehen. Der thermoplastische Kunststoff ist besonders bevorzugt ausgewählt aus der Reihe: Polyamid, Polyester, Polyolefin, Styrolcopolymerisat, Polycarbonat, Polyphenylenoxid, Polyphenylensulfid, Polyimid, Polyvinylchlorid, thermoplastisches Polyurethan, PSO oder PEEK oder möglichen Mischungen der Polymere.

Bevorzugt ist ein Leichtbauteil, dadurch gekennzeichnet, dass das Metall der Metallplatte ausgewählt ist aus der Reihe: Stahl; Aluminium; Magnesium oder einer Legierung dieser Metalle mit anderen Metallen. Die andere Platte ist bevorzugt ein Faser/Kunststoffverbund (Composite).

Die hoch feste Komponente (Metallplatte) wird in Form einer Platte, Tafel oder Folie formschlüssig mit einer thermoplastischen Rippenstruktur verbunden. Hierzu werden in der hoch festen Komponente bevorzugt Durchbrüche angebracht, durch die während des Umformprozesses die thermoplastische Schmelze fließt und auf der Rückseite, durch entsprechende Gestaltung der formgebenden Werkzeuge, Nietköpfe bildet.

Die typische Schichtdicke der (Metall)-Platte beträgt insbesondere von 0,1-2,5 mm.

Auf diese Weise können auch zwei oder mehrere direkt übereinander angeordnete hoch feste Komponenten (Metallplatten) mit deckungsgleichen Durchbrüchen verbunden werden. Dabei können die hochfesten Komponenten ebenfalls durch Formschlüsse so miteinander verbunden sein, dass die Kraftübertragung direkt von einer hochfesten Komponente zu anderen erfolgen kann. Die Kunststoffniete halten dann die hochfesten Komponenten lediglich zusammen und sichern den Werkstoffverbund.

Werden die hoch festen Komponenten nur in ihrem Randbereich direkt miteinander verbunden, können hoch belastbare Hohlkammerstrukturen geschaffen werden. Der Randbereich ist dann zwei- oder mehrlagig verstärkt und formschlüssig verbunden, während innerhalb des Randbereiches die hoch festen Komponenten durch Kunststoffrippen auf Abstand gehalten werden.

Weiterhin besteht die Möglichkeit ein Bauteil zu schaffen, das aus mehreren direkt miteinander verbundenen hochfesten Komponenten besteht, die ebenfalls mittels Kunststoffnieten gesichert werden, wobei die Kunststoffkomponente aber auch als angeformte Platten eine Abdeckung oder Ummantelung des Leichtbauteils bildet. Die Abdeckung oder Ummantelung des Leichtbauteil kann dabei auch mittels angeformter oder angefügter Schaumstoffe oder Textilien erfolgen.

Eine weitere Möglichkeit zur Realisierung der formschlüssigen Verbindung zwischen Rippenstruktur und hoch fester Komponente ist das Einarbeiten von Sicken, Vertiefungen oder Noppen in die hoch feste Komponente. Die thermoplastische Rippenstruktur wird dann ebenfalls durch Umformprozesse so gestaltet, dass sie mit der hoch festen Komponente formschlüssige Verbindungselemente bildet.

Bei der Herstellung des Leichtbauteiles werden zunächst die hoch festen Komponenten ausgestanzt, ausgesägt oder ausgeschnitten und die Durchbrüche und/oder Sicken, Vertiefungen oder Noppen abgebracht. Soll das Leichtbauteil in gewölbter Form ausgeführt werden, muss die hoch feste Komponente einen entsprechenden Umformprozess (bei Blechen durch Tiefziehen) durchlaufen.

In einem zweiten Schritt wird die thermoplastische Rippenstruktur hergestellt. In der bevorzugten Ausführung wird durch Thermoformen aus einer thermoplastischen Folie oder Platte eine Eierkarton-Struktur in ebener oder gewölbter Ausrichtung geformt.

Bei der Verfahrensweise mit Eierkarton-Struktur kann der Umformprozess zum Herstellen der Eierkarton-Struktur gleichzeitig zum Fügen der einzelnen Komponenten genutzt werden. Die hoch festen Komponenten werden hierzu in das Umformwerkzeug eingelgt. Die thermoplastische Platte wird erwärmt und über das angelegte Vakuum durch die Durchbrüche bzw. in die Vertiefungen oder über die Noppen der hoch festen Komponente geformt.

Die Rippenstruktur kann aber auch durch Extrudieren eines entsprechenden Hohlprofiles, das anschließend auf das erforderliche Maß geschnitten wird, erzeugt werden.

Wird die Rippenstruktur separat durch Extrudieren eines solchen Hohlprofils hergestellt, können mit Hilfe der hochfesten Komponenten formschlüssige Elemente an die Rippenstruktur angeformt werdem. Dies erfolgt in einem thermischen Umformprozess, bei dem die hochfeste Komponente als Formwerkzeug dient. Die hochfeste Komponente wird dabei direkt mit der Rippenstruktur verbunden und kann optional über Kleben, Schweißen, Schrauben, Schnappen oder eine Kombination dieser Fügeverfahren zusätzlich verstärkt werden. Eine weitere Möglichkeit ist das Anbringen von Durchbrüchen in das die Rippenstruktur darstellende Hohlprofil. In diese Durchbrüche ragen deckungsgleich angeordnete Noppen der hochfesten Komponente, die so einen Formschluss zwischen Rippenstruktur und hochfester Komponente herstellen.

Die extrudierten Profile können sowohl längs (Ober- oder Unterseite des Profils) als auch quer (Schnittfläche) zur Extrusionsrichtung mit der hoch festen Komponente verbunden werden. Werden die Extrusionsprofile quer zur Extrusionsrichtung mit den hoch festen Komponenten verbunden, können Schrauben- oder Schweißdome mit angeformt werden über die eine Verbindung mit der hoch festen Komponente erreicht werden kann.

Der Verbund kann auch durch punktförmiges Verschweißen zweier thermoplastischer Komponenten erzeugt werden. Hierzu umfassen zwei oder mehrere thermoplastische Komponenten eine oder mehrere hoch feste Komponenten. Die Schweißpunkte werden so angeordnet, dass sie in den Durchbrüchen der hoch festen Komponenten liegen. Dadurch wird die hoch feste Komponente zwischen die beiden thermoplastischen Komponenten eingeklemmt und formschlüssig fixiert.

Das Verschweißen zweier thermoplastischer Komponenten mit dazwischen liegender hochfester Komponente kann auch mit dem Thermoformen zur Herstellung der Eierkarton-Struktur kombiniert werden. Dabei wird zunächst die Eierkarton-Struktur geformt und anschließend, direkt im Anschluss an den Umformvorgang, über entsprechende Stempel mit einer zweiten thermoplastischen Komponente verschweißt.

Eine weitere Variante ist möglich wenn die hochfesten Komponenten aus fasermatten- oder faserfliesverstärkten Composites mit thermoplastischer Matrix bestehen. Dabei können hochfeste Komponente und thermoplastische Rippenstruktur direkt miteinander verschweißt werden.

Weiterer Gegenstand der Erfindung ist die Verwendung eines Leichtbauteiles nach der Erfindung als Konstruktionselement im Fahrzeugbau, insbesondere für die Bodengruppe, Abdeckungen für Reserveradmulde oder Kofferraum, oder für die Dachkonstruktion, insbesondere freitragende Dachkonstruktionen sowie als Waschmaschinendeckel oder Gehäuse für Kühlgeräte.

Die mit der Erfindung erzielten Vorteile können wie folgt zusammengefasst werden:
- Herstellung von hoch festen und hoch steifen gewölbten oder ebenen Leichtbauteilen
- Sandwichstrukturen mit hoher Schubsteifigkeit
- Sandwichstrukturen mit definierten Hohlräumen z.B. zur Unterbringung von Kabeln
- Qualität der Fügeverbindung weitgehend unabhängig von der Werkstoffpaarung durch formschlüssiges Fügen
- Kein schlagartiges Versagen der Leichtbau-Struktur durch Ablösen der Randschichten
- Kostengünstiger Fertigungsprozess auch für Kleinserien
- Geringe Werkzeugkosten

Die Erfindung wird nachstehend anhand von Figuren näher erläutert, ohne dass dadurch die Erfindung im Einzelnen eingeschränkt wird.

Es zeigen:
- Fig. 1, 1a: einen Querschnitt durch ein erfindungsgemäßes Leichtbauteil
- Fig. 2: einen Querschnitt durch eine Variante des Bauteils nach Fig. 1
- Fig. 3: einen Querschnitt durch ein mit Schaumstoff gefülltes Leichtbauteil
- Fig. 4: einen Querschnitt durch ein Leichtbauteil ähnlich Fig. 3
- Fig. 5: die seitliche Ansicht auf zwei ausgewählte Formen von Stützstrukturen
- Fig. 6 bis 11: Abwandlungen der Querschnittsformen für ein Leichtbauteil entsprechend Fig. 1

### Beispiele

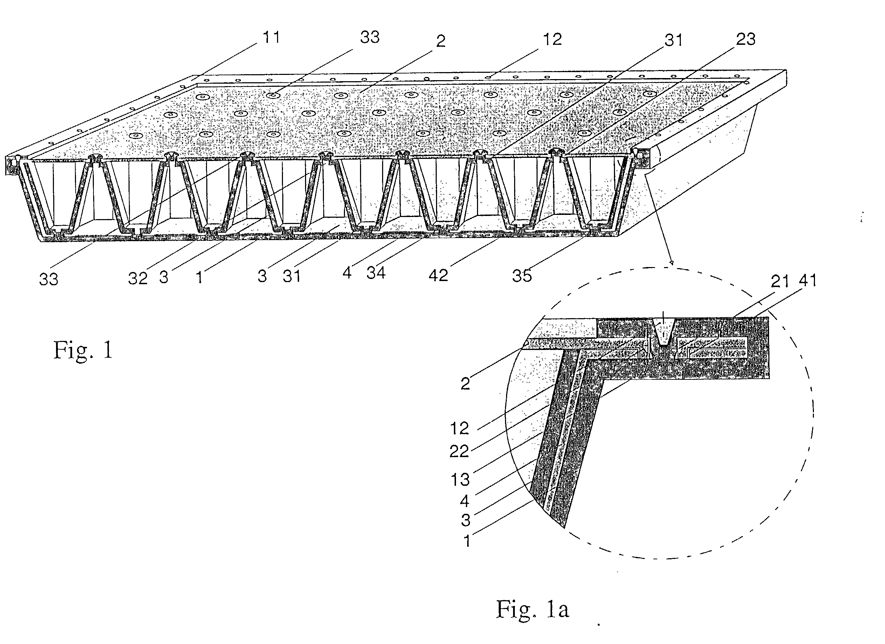

### Hohlkammer-Leichtbauteil mit innenliegender Eierkarton-Struktur Figuren 1 bis 11

Die Figuren 1 bis 11 beschreiben ein Hohlkammer-Leichtbauteil mit innenliegender Eierkarton-Struktur in unterschiedlichen Ausführungsvarianten.

Fig 1 zeigt das durchgeschnittene Hohlkammer-Leichtbauteil, das aus den Blechen 2 und 4 sowie aus der thermoplastischen Kunststoffplatte 1 und der in Form eines Eierkartons ausgebildeten Rippenstruktur 3 aufgebaut ist. Kunststoffplatte 1 umfasst im Randbereich 11 beide Bleche 2 und 4. Wie in der Detailansicht (Fig. la) zu sehen ist, sind die Bleche 2 und 4, über die im Randbereich 11 umgebörtelte Kunststoffplatte 1 unterhalb der Vertiefungen 12 über die Schweißpunkte 13 in den deckungsgleichen Durchbrüchen 21 und 41 der Bleche 2 und 4, miteinander verbunden. Durch die Sicke 22 im Durchbruch 21 des Bleches 2, die in den Durchbruch 41 des Bleches 4 ragt, sind beide Bleche 2 und 4 außerdem formschlüssig verbunden.

Die Bleche 2 und 4 werden durch die eierkartonförmige Stützstruktur (Eierkarton-Struktur) 3 über die parallelen Anlageflächen 31 der Eierkarton-Struktur 3 abgestützt. Blech 2 ist über die Nietköpfe 33 mit der Eierkarton-Struktur 3 verbunden. Die Verbindung zwischen Kunststoffplatte 1 und Eierkarton-Struktur 3 wird über die Schweißpunkte 35 realisiert. Da sich die Schweißpunkte 35 in den Durchbrüchen 42 des Bleches 4 befinden und da Blech 4 außerdem zwischen Kunststoffplatte 1 und Eierkarton-Struktur 3 angeordnet ist, kann über die Verbindung von Kunststoffplatte 1 und Eierkarton-Struktur 3 auch die zusätzliche Fixierung von Blech 4 erreicht werden.

Die Herstellung des in Fig 1 dargestellten Leichtbauteils erfolgt durch einen mehrstufigen Umform- und Schweißprozess. Demnach werden zunächst die Bleche 2 und 4 gestanzt und tiefgezogen, sowie die Kunststoffplatte 1 und die Eierkartonstruktur 3 aus einer ebenen Platte warmgeformt. Dann werden Blech 4 und Eierkarton-Struktur 3 in Kunststoffplatte 1 gesetzt. Kunststoffplatte 1 und Eierkarton-Struktur 3 werden daraufhin durch Ultraschall-Schweißen an den Schweißpunkten 35 verschweißt. Nun wird Blech 2 auf die Eierkarton-Struktur 3 gelegt, so dass die noch nicht umgeformten Nietköpfe 33 durch die Durchbrüche 21 des Bleches 2 sowie die Sicken 22 von Blech 2 durch die Durchbrüche 41 von Blech 4 ragen. Zuletzt werden die noch nicht umgeformten Nietköpfe 33 der Eierkarton-Struktur 3 sowie die noch nicht hergestellten Schweißpunkte 13 im Randbereich 11 der Kunststoffplatte 1 in einem thermischen Umformprozess zu ihrer endgültigen Gestalt umgeformt. Hierzu wird insbesondere die Kunststoffplatte 1 im Randbereich 11 erwärmt und mit Hilfe eines entsprechenden Werkzeuges umgefalzt. Die Schweißpunkte 13 werden mit Hilfe von erwärmten Dornen über die Vertiefungen 12 angebracht. Ebenfalls mit erwärmten Dornen erfolgt die Umformung der Nietköpfe 33.

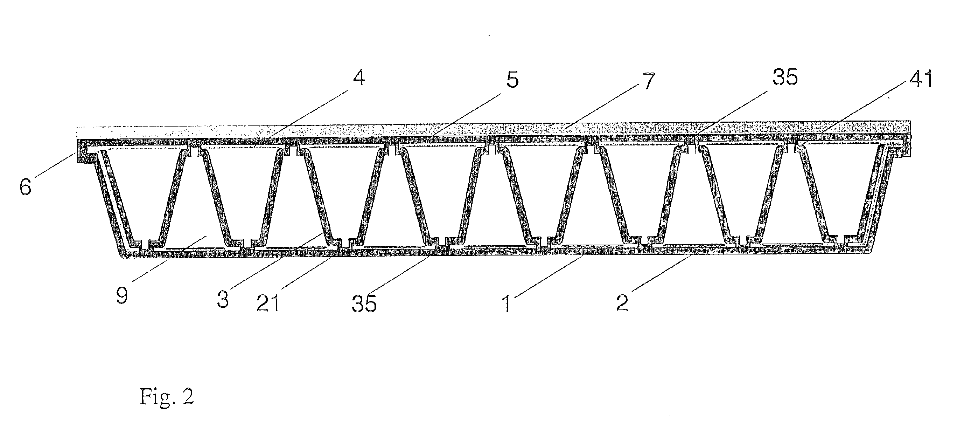

Fig. 2 zeigt einen Schnitt durch eine Sandwichstruktur nach Fig 1, die in bestimmten Bereichen abgewandelt wurde. Das Leichtbauteil gemäß Fig. 2 besteht aus den Blechen 2 und 4, die durch die Eierkarton-Struktur 3 auf Abstand gehalten werden. Die Kunststoffplatten 1 und 5 umschließen die Bleche 2 und 4. Kunststoffplatte 5 ist außerdem mit einer Textillage 7 versehen. Die Kunststoffkomponenten 1, 3 und 5 sind dabei an den Verbindungsstellen 6 und 35 miteinander verschweißt oder verklebt. Die Verbindungsstellen 6 und 35 befinden sich ebenfalls in den Druchbrüchen 21 und 41 der Bleche 2 und 4, so dass sich eine formschlüssiger Verbund der einzelnen Komponenten ergibt. Die Textillage 7 ist aufgeklebt. Die Hohlräume 9 der Eierkarton-Struktrur 3 sind mit Luft gefüllt.

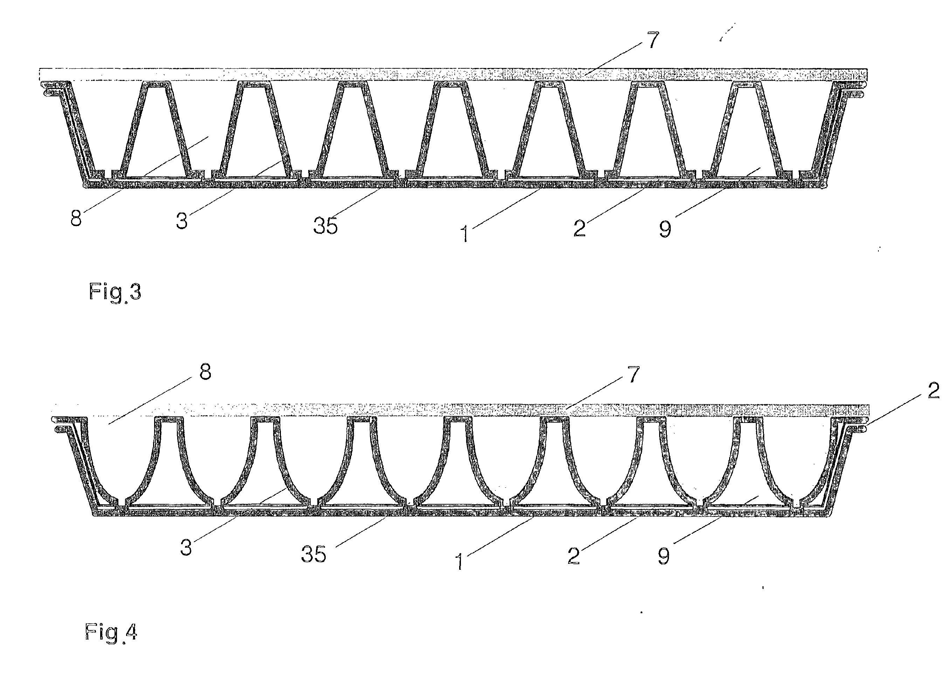

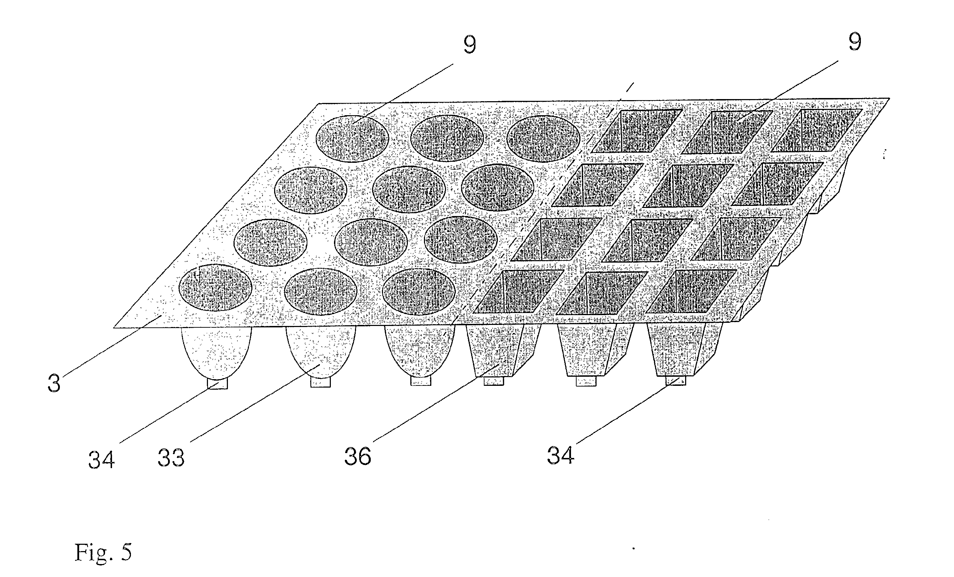

In den Fig. 3 und 4 sind die Hohlräume der Eierkarton-Struktur 3 einseitig mit einem Schaumstoff 8 ausgefüllt. Die Figuren 3 und 4 zeigen ebenfalls abgewandelte Formen der Sandwichstruktur von Fig 1. Die Eierkarton-Struktur ist jedoch nur einseitig ausgeführt. Eine Darstellung der Eierkarton-Strukturen gemäß der Figuren 3 und 4 wird in Fig 5 gegeben. Die Eierkarton-Struktur 3 ist mit ellipsoiden bzw. pyramidenstumpfförmigen Hohlräumen 9 ausgestattet, die durch Dome 36 gebildet werden und an die Verbindungselemente 34 angeformt sind.

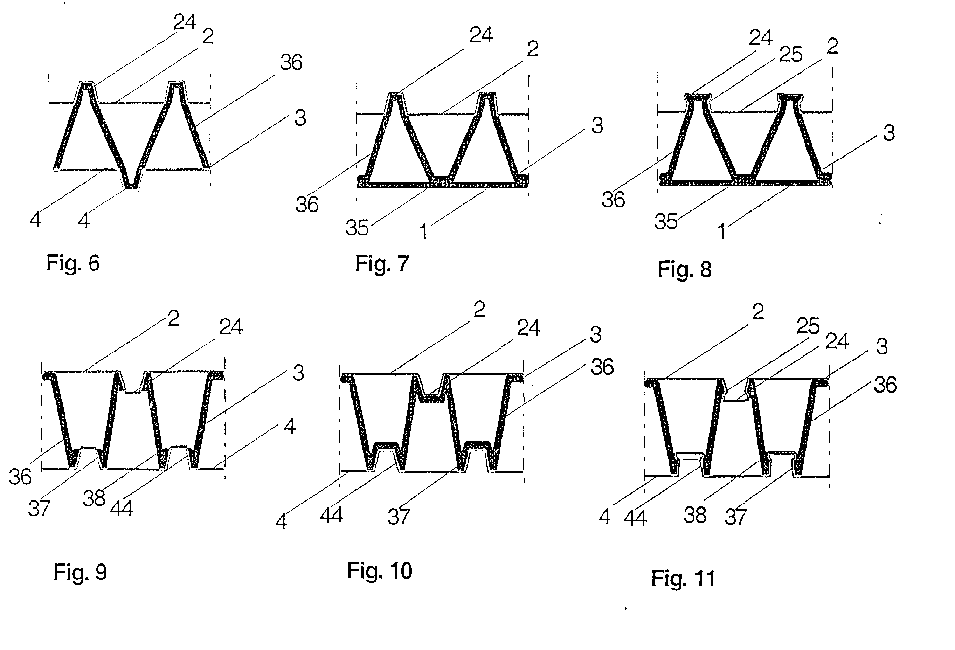

In den Figuren 6 bis 11 werden in Ausschnitten Abwandlungen der Sandwichstruktur von Fig 1 wiedergegeben. Hierbei werden unterschiedliche Verbindungsmöglichkeiten zwischen den Blechen 2 und 4 und der Eierkarton-Struktur 3 dargestellt.

In Fig 6 werden die zwei genoppten Bleche 2 und 4 dadurch mit der Eierkarton-Struktur 3 verbunden, dass die Spitzen der Dome 36 der Eierkarton-Struktur 3 in den Noppen 24 und 44 der Bleche 2 und 4 stecken. Die Verbindung kann durch einen Klebstoff unterstüzt werden.

Fig 7 zeigt eine Sandwichstruktur bestehend aus einer Kunststoffplatte 1, einer Eierkarton-Struktur 3 sowie einem genoppten Blech 2.

Das Leichtbauteil nach Fig 8 zeigt einen ähnlichen Aufbau wie bei Fig 7. Allerdings sind in Fig 8 die Noppen 24 des Bleches 2 über eine Sicke 25 formschlüssig mit der Eierkarton-Struktur 3 verbunden.

Die Darstellungen in den Figuren 9 bis 11 zeigen Verbindungen von Blechen 2und 4 mit einer dazwischenliegenden Eierkarton-Struktur 3. In diesen Beispielen sind die Noppen 24 und 44 nach innen zur Eierkarton-Struktur 3 hin geformt. Die Eierkarton-Struktur 3 weist in den Domen 36 ebenfalls Vertiefungen 37 auf, die nach innen gerichtet sind. In Fig 9 und 11 sind diese Vertiefungen mit einem Durchbruch 38 versehen, durch die Noppen 24 und 44 der Bleche 2 und 4 ragen. Bei Fig 11 sind die Noppen 24 und 44 mit einer Sicke 25 ausgestattet, die für eine formschlüssige Verbindung quer zur Plattenebene des Leichtbauteils zwischen den Komponenten 2, 4 und 3 sorgt.

## Patentansprüche

1. Plattenförmiges Leichtbauteil auf Basis eines Kunststoff-Metall-Verbundes bestehend wenigstens aus zwei gegenüberliegend angeordneten Platten (2), (4), von denen wenigstens eine Platte eine Metallplatte ist, und einer zwischenliegenden Hohlräume bildenden Stützstruktur (3) aus thermoplastischem Kunststoff, wobei die Platten (2; 4) mit der Stützstruktur an mehreren diskreten Verankerungspunkten (21, 41) festverbunden sind, **dadurch gekennzeichnet, dass** die Verankerungspunkte (21, 41) auf der Fläche der Platten (2; 4) gleichmäßig verteilt sind.

2. Leichtbauteil nach Anspruch 1, **dadurch gekennzeichnet, dass** die Stützstruktur (3) mindestens in zwei Richtungen der Ebene der (Metall)-Platten (2; 4) gesehen spiegelsymmetrisch ausgebildet ist.

3. Leichtbauteil nach einem der Ansprüche 1 oder 2, **dadurch gekennzeichnet, dass** mindestens eine Seite eines Hohlraumes, der durch die Stützstruktur (3) und eine der (Metall)-Platten (2) oder (4) gebildet wird, mit einem Schaumstoff (8) ausgefüllt ist.

4. Leichtbauteil nach einem der Ansprüche 1 bis 3, **dadurch gekennzeichnet, dass** die Verankerungspunkte in Form von Durchbrüchen (21, 41), Ausnehmungen, Noppen (24, 44) ausgebildet sind.

5. Leichtbauteil nach einem der Ansprüche 1 bis 4, **dadurch gekennzeichnet, dass** der thermoplastische Kunststoff ausgewählt ist aus der Reihe: Polyamid, Polyester, Polyolefin, Styrolcopolymerisat, Polycarbonat, Polyphenylenoxid, Polyphenylensulfid, Polyimid, Polyvinylchlorid, thermoplastisches Polyurethan, PSO oder PEEK oder möglichen Mischungen der Polymere.

6. Leichtbauteil nach einem der Ansprüche 1 bis 5, **dadurch gekennzeichnet, dass** das Metall der Metallplatte ausgewählt ist aus der Reihe: Stahl; Aluminium; Magnesium oder einer Legierung dieser Metalle mit anderen Metallen.

7. Leichtbauteil nach einem der Ansprüche 1 bis 6, **dadurch gekennzeichnet, dass** eine nichtmetallische Platte vorgesehen ist, die aus einem Faser/Kunststoff-Verbund (Composite) besteht.

8. Verwendung eines Leichtbauteiles nach einem der Ansprüche 1 bis 7 als Konstruktionselement im Fahrzeugbau, insbesondere für die Bodengruppen, Abdeckungen für Reserveradmulde oder Kofferraum, oder für die Dachkonstruktion sowie als Waschmaschinendeckel.
